# EUROPÄISCHE PATENTSCHRIFT

(11) **EP 0 486 433 B1**
(45) Veröffentlichungstag und Bekanntmachung des Hinweises auf die Patenterteilung: **26.04.1995**
(21) Anmeldenummer: 91810891.1
(22) Anmeldetag: 15.11.1991
(51) Int. Cl.: A47J 31/40

(54) **Brühvorrichtung für eine Kaffeemaschine**
Brewing device for a coffee machine
Dispositif d'infusion pour une machine à café

(30) Priorität: 16.11.1990 CH 3651/90
(43) Veröffentlichungstag der Anmeldung: 20.05.1992
(73) Patentinhaber: JURA ELEKTROAPPARATE AG, CH-4626 Niederbuchsiten (CH)
(72) Erfinder: Torma, Mikael, CH-4612 Wangen b. Olten (CH)
(74) Vertreter: Tschudi, Lorenz

(56) Entgegenhaltungen:
- EP-A- 0 154 206
- EP-A- 0 237 399
- EP-A- 0 295 565
- EP-A- 0 407 365
- FR-A- 2 424 010

## Beschreibung

Die vorliegende Erfindung bezieht sich auf eine Brühvorrichtung gemäss dem Oberbegriff des Patentanspruches 1.

Aus dem Stand der Technik ist eine Vorrichtung zur Zubereitung von Heissgetränken insbesondere von Kaffee vorbekannt, die den Nachteil aufweist, dass der Brühkammerraum zur Aufnahme des Getränkepulvers kein variables Volumen aufweist und sich diese Vorrichtung somit nicht zum optimalen Brühen von Kaffeeportionen mit einer variablen Kaffeepulvermenge eignet. Wenn beim Gegenstand dieser Druckschrift ein grösseres Brühvolumen gewählt würde, so müsste auch ein grösserer Exzenter gewählt werden und somit würde die Gesamtapparatur bezüglich Breite und Höhe grössere Dimensionen aufweisen. Aus der FR-A-2 424 010 ist eine Kaffeemaschine vorbekannt, bei welcher in Seitenplatten Nuten zur Führung von Zapfen einer verkipp- und verschiebbaren Brühkammereinrichtung vorgesehen sind. Diese Vorrichtung weist den Nachteil auf, dass sie eine grosse Bauhöhe erfordert.

Es ist deshalb eine Aufgabe der vorliegenden Erfindung, eine Brühvorrichtung für eine Kaffeemaschine zu schaffen, welche eine geringe Baugrösse aufweist. Dies wird erfindungsgemäss erzielt durch die kennzeichnenden Merkmale des Patentanspruches 1. Bei einer bevorzugten Ausführungsform der Erfindung weist die Brühkammer beidgegenüberliegend den Seitenplatten je zwei Führungszapfen auf, wobei die in je einer Seitenplatte liegenden Nuten und die in diesen Nuten geführten Zapfen eine voneinander verschiedene Tiefe resp. Höhe aufweisen, wobei die Nuten sich überschneiden. Durch diese Ausführungsform wird sichergestellt, dass beim Verschieben der Brühkammer längs der Nuten die Zapfen an den Kreuzungspunkten der Nuten nicht in die falsche Nut gelangen können.

Weitere bevorzugte Ausführungsformen ergeben sich aus den abhängigen Ansprüchen.

Im folgenden werden anhand der beiliegenden Zeichnung Ausführungsbeispiele der Erfindung sowie deren Verwendung näher beschrieben. Es zeigen:
**Fig. 1** einen Längsschnitt durch die Brühvorrichtung,
**Fig. 2** eine Hinteransicht gemäss Pfeil A der Fig. 1,
**Fig. 3** eine perspektivische Explosionsansicht der Brühvorrichtung,
**Fig. 4** einen Längsschnitt durch die Brühkammer,
**Fig. 5** einen Schnitt gemäss Linie V-V der Fig. 4,
**Fig. 6** eine Ansicht gemäss Pfeil B der Fig. 4,
**Fig. 7** eine Ansicht gemäss Pfeil C der Fig. 4,
**Fig. 8** einen Schnitt gemäss Linie VIII-VIII der Fig. 4,
**Fig. 9** eine perspektivische Darstellung der Verankerung des Seilzugs an der Kolbenstange,
**Fig. 10** eine Draufsicht auf die Siebplatte der Brühkammer,
**Fig. 11** eine Ansicht gemäss Pfeil D der Fig. 12 des Kaffeeausgusses,
**Fig. 12** einen Längsschnitt durch die Brühvorrichtung in Brühstellung,
**Fig. 13 - 20** eine Ansicht der verschiedenen Positionen der Brühkammer,
**Fig. 21** einen Schnitt durch den Wasseranschluss der Brühkammer,
**Fig. 22** eine weitere Ausführungsvariante des Brühkolbens.

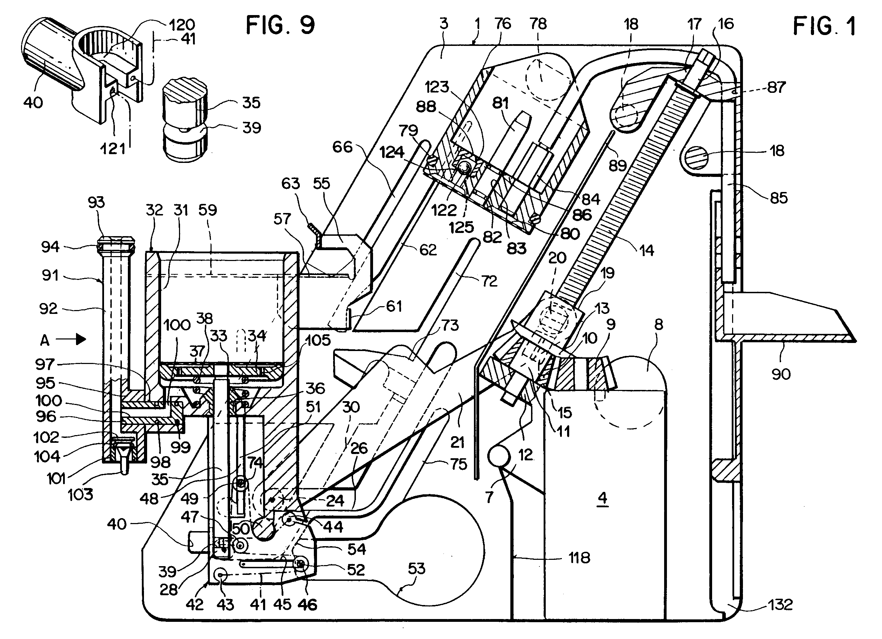

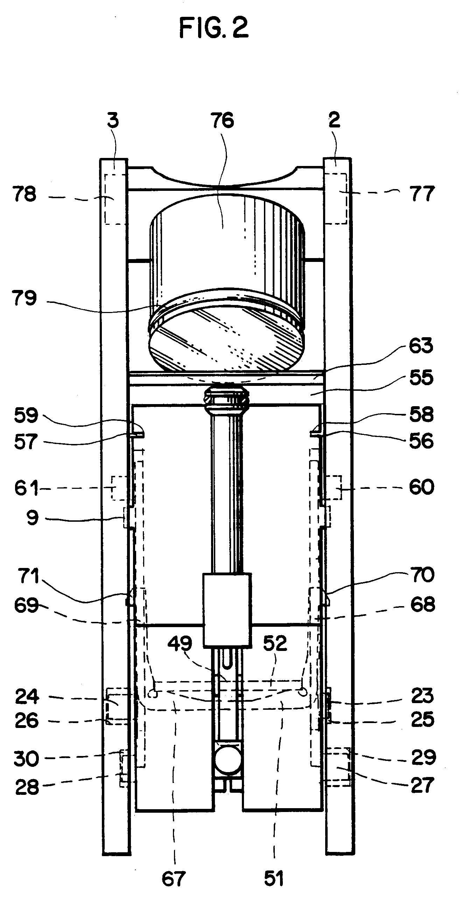

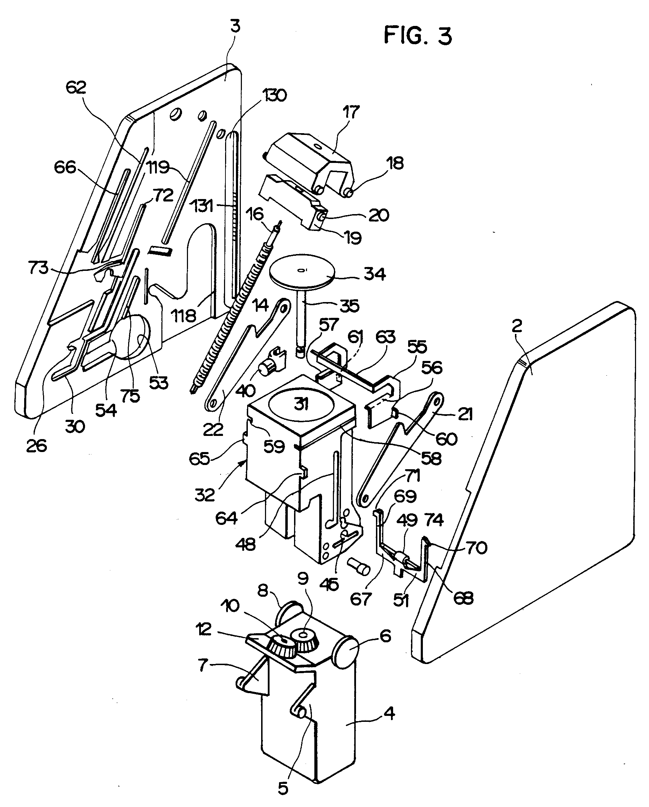

Fig. 1 zeigt einen Längsschnitt durch die Brühvorrichtung, Fig. 2 eine Ansicht gemäss Pfeil A der Fig. 1 und Fig. 3 eine perspektivische Explosionsansicht der Brühvorrichtung. Die Brühvorrichtung 1 umfasst zwei Seitenplatten 2 und 3, welche zur Befestigung und Führung von Einzelteilen der Brühvorrichtung dienen. Ein ausklinkbarer Motor 4 ist mit Ansätzen 5, 6, 7 und 8 in Oeffnungen 118 in den Seitenplatten 2 und 3 gehalten. Der Motor weist ein Antriebskegel-Zahnrad 9 sowie ein mit diesem in Eingriff stehendes weiteres Kegelzahnrad 10 auf. Das Kegelzahnrad 10 ist mit einem Einsatz 11 in einer Ansatzplatte 12 des Motors drehbar gelagert. Der Einsatz 11 ist mit dem Kegelrad 10 drehfest verbunden und weist an einem seiner Enden einen Teller 13 auf, der das Kegelrad 9 in Position hält. Eine Gewindestange 14 ist mit ihrem einen Ende in einer Ausnehmung 15 des Einsatzes 11 gelagert und drehfest mit dem Einsatz 11 und somit auch mit dem Kegelrad 10 verbunden. An ihrem anderen Ende ist die Gewindestange 14 mit einem Ansatzstück 16 in einem Lager 17 drehbar gelagert. Das Lager 17 ist mit Zapfen 18 in den beiden Seitenplatten 2 und 3 befestigt. Die Gewindestange 14 ist durch eine mit einem inneren Gewinde versehene Nuss 19 geführt, wobei bei Betätigung des Motors 4 die Gewindestange 14 gedreht und die Nuss 19 entlang derselben verschoben wird. Die Nuss weist seitliche Zapfen 20 auf, welche in Nuten 119 in den Seitenplatten 2 und 3 geführt sind. Die Zapfen 20 der Nuss 19 greifen in entsprechende Ausnehmungen zweier sich seitlich der Nuss nach unten erstreckender Bügel 21 und 22 ein. Die Bügel 21 und 22 sind über Zapfen 23 und 24 mit dem unteren Teil der Brühkammer 32 verbunden. Die Zapfen 23 und 24 sind in winkelförmigen, in den Seitenplatten 2 und 3 angeordneten Nuten 25 und 26 geführt. Dabei ist die Tiefe der Nut 25 geringer als diejenige der Nut 26, wobei der in der Nut 25 geführte Zapfen 23 eine entsprechend geringere Höhe aufweist als der in der Nut 26 geführte Zapfen 24. Die Zapfen 23 und 24 liegen in derselben Achse. Weiter sind am unteren Teil der Brühkammer 32 noch zwei weitere Zapfen 27 und 28 angeordnet, die ebenfalls auf einer Achse liegen und in Nuten 29 und 30 geführt werden. Die Nut 30 weist eine geringere Tiefe auf als die Nut 29, wobei der in der Nut 30 geführte Zapfen 28 eine entsprechende geringere Höhe aufweist als der in der Nut 29 geführte Zapfen 27. Die Nuten 25, 26, 29 und 30 weisen je einen waagrechten und einen schräg parallel zur Gewindestange 14 verlaufenden Teil auf. Die jeweils in einer Seitenplatte 2 und 3 angeordneten Nuten 25 und 29 resp. 26 und 30 kreuzen sich. Die Nut 25 der Seitenplatte 2 liegt der Nut 26 der Seitenplatte 3 und die Nut 29 der Seitenplatte 2 liegt der Nut 30 der Seitenplatte 3 gegenüber. Die beiden Zapfen auf jeweils einer Seite des unteren Teils der Brühkammer 32 stehen in unterschiedlicher Länge von demselben ab, wobei auch die Nuten zur Führung der Zapfen jeweils in einer Seitenplatte eine verschiedene Tiefe aufweisen. Damit wird sichergestellt, dass beim Verschieben der Brühkammer längs der Nuten die Zapfen an den Kreuzungspunkten der Nuten nicht in die falsche Nut gelangen können.

In einer zylindrischen Oeffnung 31 der Brühkammer 32 wird eine Siebplatte 33 und eine darunter befindliche Halteplatte 34 mittels einer Kolbenstange 35 während des Brühzyklus im Brühzylinder 31 nach oben und unten bewegt. Die Kolbenstange 35, die Halteplatte 34 und die Siebplatte 33 bilden einen beweglichen Kolben. Die Kolbenstange 35 ist in einer Hülse 36 geführt. Konzentrisch zur Hülse 36 befindet sich eine Ringnut 37, in welcher eine Feder 38 eingelassen ist. Am von der Siebplatte entgegengesetzten Ende der Kolbenstange 35 befindet sich eine Ringnut 39, in welche eine Halterung 40 zur Halterung der Enden eines Zugorganes 41 in der Form einer Kunststoff-oder Stahlschnur, eines Seils, eines Bandes oder eines bandähnlichen Organs eingelassen ist. Die Schnur 41 ist in im unteren Teil 42 der Brühkammer angeordneten Halterungen 43 und 44 verankert. Die Halterungen 43 und 44 können mit dem Zugorgan 41 integriert ausgebildet sein. Die Schnur 41 ist von der Verankerung 43 über eine in einem Schlitz 45 bewegliche Rolle 46 und über eine feste Rolle 47 zur Verankerung 40 und von dort über eine in einem vertikalen Schlitz 48 auf und ab bewegliche Rolle 49 über eine feste Rolle 50 zur Halterung 44 geführt. Die Rolle 49 ist in einem im vertikalen Schlitz 48 verschiebbaren Bügel 51 gelagert. Im horizontalen Schlitz 45 ist ein Stift 52, auf welchem die Rolle 46 drehbar gelagert ist, verschiebbar angeordnet. Ausnehmungen 53 in den Seitenplatten 2 und 3 weisen einen Absatz 54 auf, welcher als Anschlag für den Stift 52 dient. Der durch die Schnur 41 gebildete Seilzug im unteren Teil 42 der Brühkammer 32 dient zur Betätigung der Kolbenstange 35, während der Bewegung der Brühkammer 32 in den einzelnen Phasen des Brühvorganges. Dabei wird durch die Anordnung der Rollen 46 und 49 eine Uebersetzung 2 : 1 erzielt, d.h. die Rollen 46 und 49 führen nur den halben Weg der Kolbenstange 35 aus, wodurch die Baugrösse der Brühvorrichtung geringer wird. Es könnte auch ein anderes Uebersetzungsverhältnis gewählt werden.

Die Brühvorrichtung ist mit einem Abstreifer 55 versehen, der mit Ansätzen 56 und 57 in Nuten 58 und 59 im oberen Bereich der Brühkammer 32 geführt ist. Seitliche Flügel 60 und 61 am Abstreifer 55 dienen zur Führung desselben während der einzelnen Phasen des Brühvorganges in Nuten 62 der Seitenplatten 2 und 3. Der Abstreifer 55 ist an seinem oberen Ende mit einer Schiene 63 zum Abstreifen des auf der Siebplatte 33 befindlichen Kaffeekuchens versehen, wenn sich die Siebplatte in ihrer oberen Stellung im Brühzylinder 31 befindet. Die Brühkammer ist weiter mit zwei Ansätzen 64 und 65 versehen, welche in Nuten 66 der Seitenplatten 2 und 3 geführt werden.

Der Bügel 51 weist einen horizontalen Teil 67 und zwei daran anschliessende vertikale Arme 68 und 69 auf, wobei die Enden der Arme 68 und 69 mit Ansätzen 70 und 71 versehen sind. Die Ansätze 70 und 71 sind in Nuten 72 der Seitenplatten 2 und 3 geführt. Die Nuten 72 weisen je einen Absatz 73 auf, an welchem die Ansätze 70 und 71 des Bügels 51 bei der Abwärtsbewegung der Brühkammer nach dem Brühvorgang hängen bleiben, wodurch die auf einem Stift 74 drehbar gelagerte Rolle 49 im vertikalen Schlitz 48 nach oben verschoben wird, sich dadurch die Kolbenstange 35 nach oben in der Richtung des Brühzylinders 31 bewegt und die Siebplatte 33 mit dem Kaffeekuchen in den oberen Bereich des Brühzylinders 31 verschoben wird. Bei der horizontalen Verschiebung der Brühkammer steht der durch die bewegliche Rolle 46 geführte Stift 52 am Ansatz 54 an, wodurch die Siebplatte 33 wieder nach unten in den Brühzylinder 31 gezogen wird. Bei der Aufwärtsbewegung der Brühkammer parallel zur Gewindestange 14 werden die Enden des Stiftes 52 in Nuten 75 der Seitenplatten 2 und 3 geführt.

Im oberen Bereich der Seitenplatten 2 und 3 ist ein fester Brühkolben 76 mit Ansätzen 77 und 78 in den Seitenplatten 2 und 3 befestigt. Der Brühkolben ist in seinem unteren Bereich mit einem Dichtungsring 79 versehen. Eine Siebplatte 80 ist mit einem Stift 81 im unteren Teil des Brühkolbens 76 befestigt. Mit dem Stift 81 kann die Siebplatte nach unten zwecks Reinigung ausgestossen werden. Der Stift 81 ist mit zwei O-Ringen 82 und 86 in der Bohrung 83 für den Stift 81 gedichtet. Im weiteren ist im Brühkolben 76 ein Rohr 84 für den Abfluss des gebrühten Kaffees aus dem Brühzylinder 31 angeordnet. An das Rohr 84 ist ein Schlauch 85 angeschlossen, welcher durch eine Ausnehmung 87 im Lager 17 geführt ist. Im weiteren ist im unteren Bereich des Brühkolbens 76 eine Ausnehmung 88 zur Aufnahme eines Ventilkörpers 122 vorgesehen. Der Ventilkörper ist kugelförmig ausgebildet. Beim Brühvorgang und anschliessenden Ausfliessen des gebrühten Kaffees durch den Schlauch 85 ist das Ventil geschlossen, wobei der kugelförmige Ventilkörper gegen den oberen Rand 123 der Ausnehmung 88 dichtet. Nachdem der gebrühte Kaffee zum grössten Teil abgeflossen ist, befindet sich noch ein Rest im Schlauch 85, wobei in dieser Phase der Ventilkörper 122 nach unten auf einen Rand 124 der Ausnehmung 88 fällt und dadurch Luft durch einen Kanal 125 in das der Siebplatte 80 gegenüberliegende Ende des Rohres 84 gelangen kann und somit der restliche Kaffee im Schlauch 85 über den Kaffeeausguss 90 in die Tasse abfliesst. Dabei geht kein Kaffee verloren, wobei auch ein trockenerer Kaffeekuchen erhalten wird. Der Kaffeeausguss 90 ist unterhalb des Endes des Schlauches 85 angeordnet und weist einen Winkel von etwa 10° zur Horizontalen auf. Zwischen dem Brühkolben 76 und der Gewindestange 14 ist ein Schutzblech 89 angeordnet.

Im unteren Bereich der Brühkammer 32 ist ein Frischwasseranschluss 91 angebracht. Dieser umfasst ein vertikales Rohr 92, welches oben eine Verbreiterung 93 mit einem Dichtungsring 94 aufweist.

In einem seitlichen Ansatz 95 ist ein Verbindungsstück 96 gehalten, welches in eine Bohrung 97 in der Brühkammer 32 eingeführt ist. Das Verbindungsstück 96 ist mit zwei O-Ringen 98 und 99 in der Bohrung 97 gedichtet. Ein Kanal 100 im Verbindungsstück 96 verbindet das vertikale Rohr 92 des Frischwasseranschlusses mit dem Brühzylinder 31. Im unteren Bereich des vertikalen Rohres 92 des Frischwasseranschlusses 91 ist auf einer Halterung 101 ein Ventilkörper mit einem oberen verbreiterten Teil 102 und einem unteren Betätigungsteil 103 gehalten und mit einem O-Ring 104 gedichtet. Wenn der Ventilkörper 102, 103 nach oben in der Halterung 101 gedrückt wird, so kann Restwasser aus der Brühwasserzuführung 91 abgelassen werden. Der stiftförmige Teil 103 des Ventilkörpers, der aus dem unteren Teil des vertikalen Rohres 92 hinausragt, wird durch einen Anschlag betätigt, wenn sich die Brühkammer 32 in der äussersten untersten Stellung zur Einfüllung von Kaffeepulver befindet.

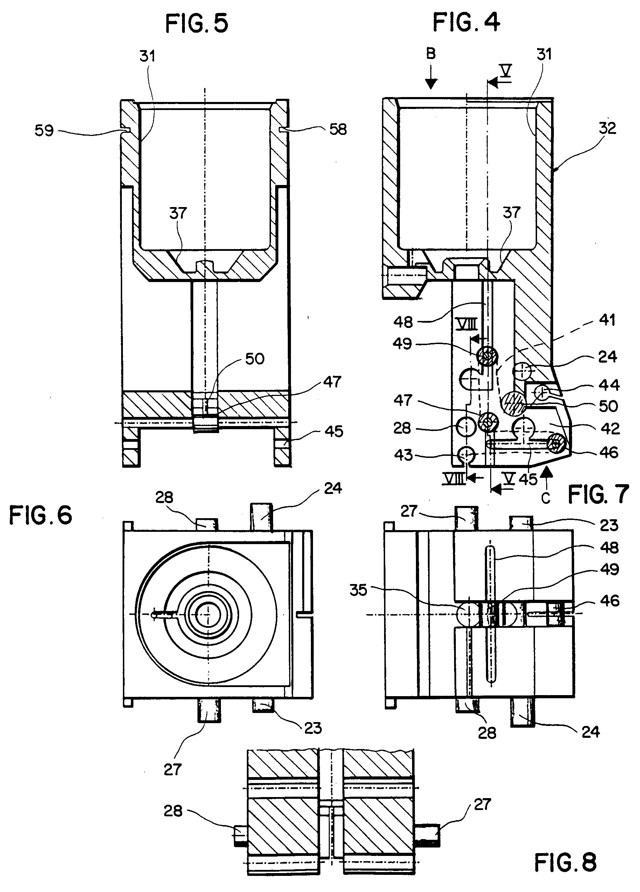

Fig. 4 zeigt einen Längsschnitt durch die Brühkammer 32. Fig. 5 zeigt einen Schnitt gemäss Linie V-V der Fig. 4. Fig. 6 zeigt eine Ansicht gemäss Pfeil B der Fig. 4. Fig. 7 zeigt eine Ansicht gemäss Pfeil C der Fig. 4. Fig. 8 zeigt einen Schnitt gemäss Linie VIII-VIII der Fig. 4.

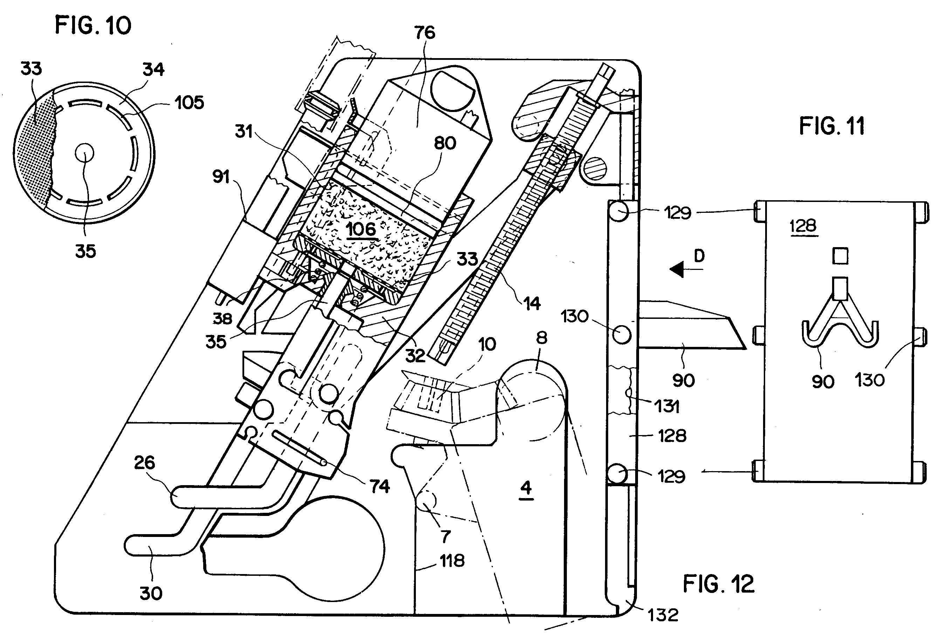

Fig. 9 zeigt ein Detail der Halterung für die Schnur des Seilzuges. Die Halterung 40 weist einen etwa halbkreisförmigen Kanal 120 mit einer Durchgangsbohrung 121 auf, in welcher die Kunststoffschnur 41 eingeführt ist. Die Schnur 41 wird mit einer nicht dargestellten, in der Halterung 40 geführten Imbusschraube arretiert. Bei der Befestigung der Halterung auf der Kolbenstange 35 kommt der Kanal 120 in die Nut 39 am unteren Ende der Kolbenstange zu liegen.

Fig. 10 zeigt eine Draufsicht auf die Siebplatte 33 mit darunter befindlicher Halteplatte 34. Konzentrisch zum äusseren Umfang sind Schlitze 105 vorgesehen, durch welche das Brühwasser gleichmässig im äusseren Bereich in den Brühzylinder 31 dringt. Dadurch wird eine gleichmässige Durchflutung des sich über der Siebplatte 33 befindlichen Kaffeepulvers bewirkt.

Fig. 11 zeigt eine Ansicht gemäss Pfeil D der Fig. 12 auf die vorderseitige Wand der Brühvorrichtung mit der den Kaffeeausguss 90 enthaltenden Platte 128, welche mit Führungszapfen 129 und Rasterzapfen 130 versehen ist. Die Zapfen 130 greifen in eine entsprechende Rasterung 131 der vorderseitigen Wand ein. Der Kaffeeausguss ist zweiteilig ausgebildet, so dass ein oder zwei Tassen gefüllt werden können.

Fig. 12 zeigt einen Längsschnitt durch die Brühvorrichtung, wobei sich die Brühkammer in Brühstellung befindet. Im Brühzylinder 31 befindet sich Kaffeepulver 106. Die Platte 128 wird von unten in Nuten 132 eingeführt. Der Motor 4 ist in einer ausgeklinkten Stellung, beispielsweise zur Wartung, dargestellt. Im weiteren ist, teilweise weggebrochen, noch die Rasterung 131 ersichtlich, in welche die Rasterzapfen 130 einrasten. Die Platte 128 kann in der Höhe verstellt und damit dem Gefäss zur Aufnahme des Kaffees angepasst werden.

In der Kaffeepulver-Einfüllstellung gemäss Fig. 1 und der Brühstellung gemäss Fig. 12 wird der Motor 4 durch Steuermittel gestoppt, wobei in den obgenannten Endstellungen das erhöhte Drehmoment über den ansteigenden Strom erfasst wird.

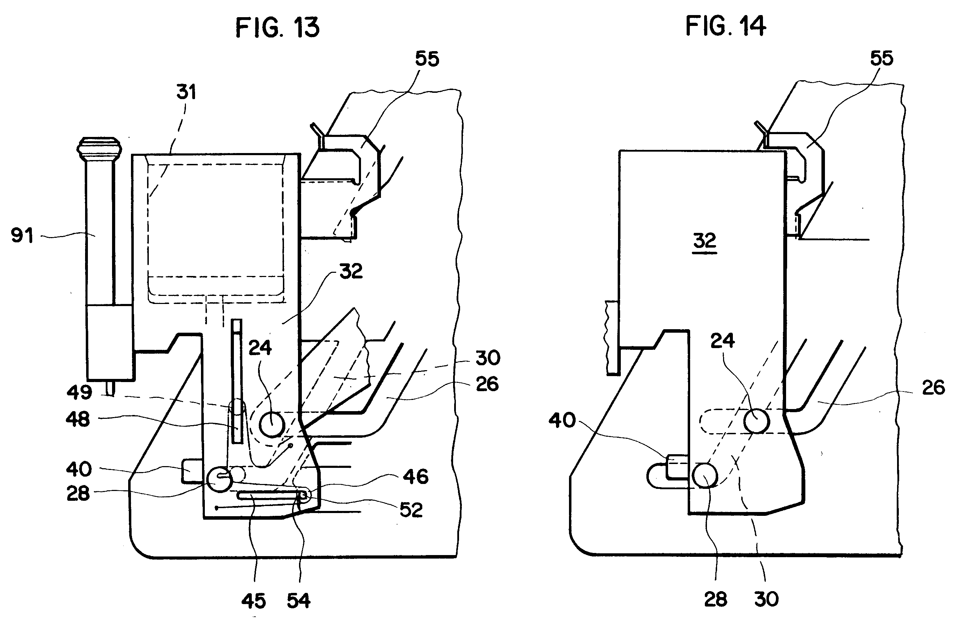

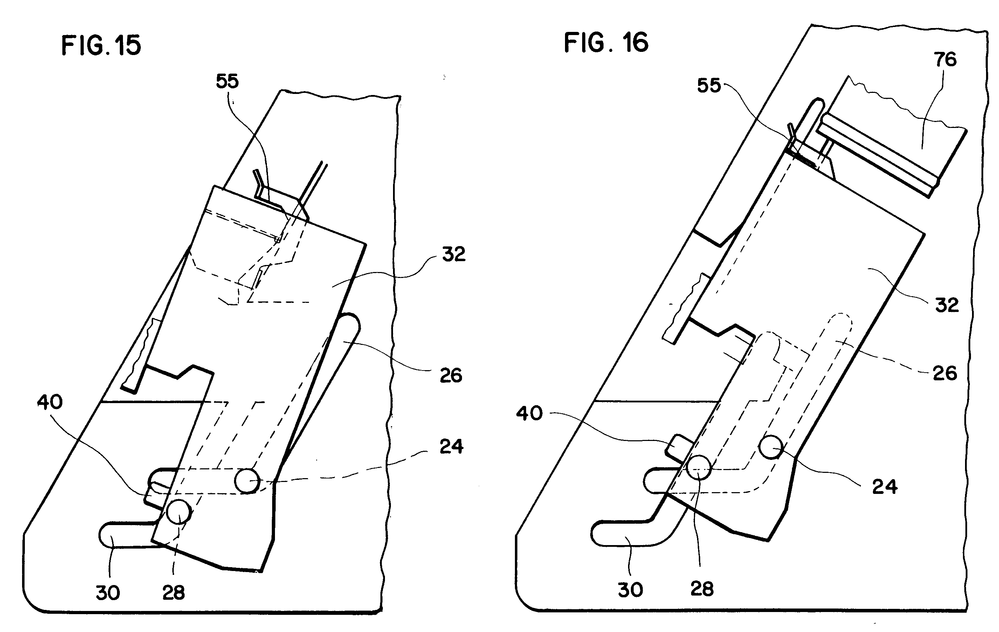

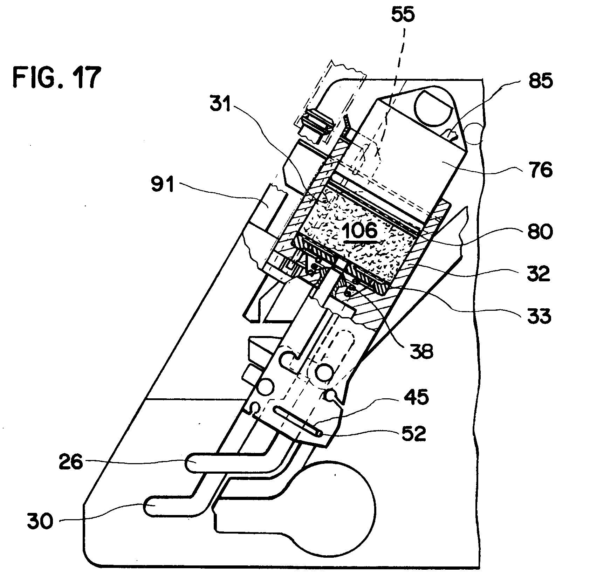

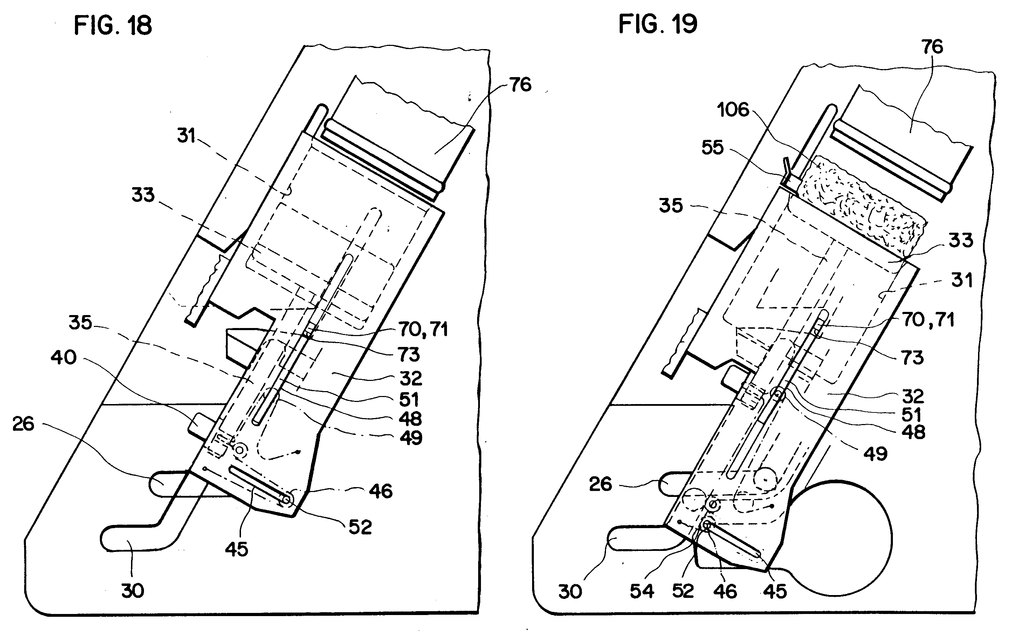

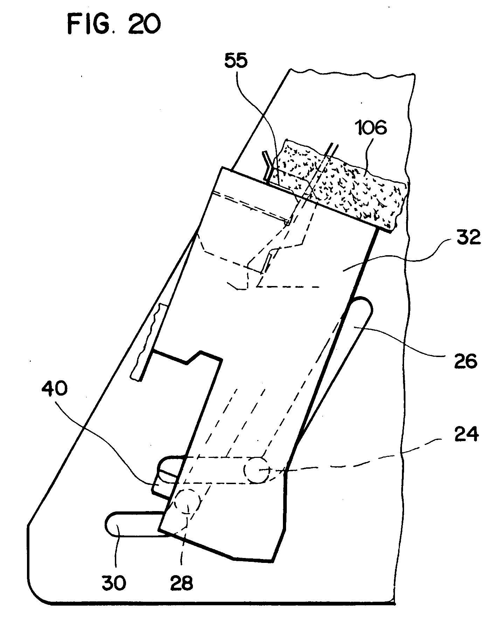

Fig. 13 - 20 zeigen die Brühkammer in den verschiedenen Phasen des Brühvorgangs. Bei der Stellung gemäss Fig. 13 erfolgt die Einfüllung des Kaffeepulvers in den Brühzylinder 31. Der Stift 52 mit der Rolle 46 des Seilzuges befindet sich dabei ganz rechts gemäss Fig. 13, im horizontalen Schlitz 45. Die Rolle 49 befindet sich zusammen mit dem Bügel 51 unten im vertikalen Schlitz 48. Der Auswerfer 55 befindet sich ausserhalb der oberen Oeffnung des Brühzylinders 31. In der Stellung der Brühkammer gemäss Fig. 13 wird das Kaffeepulver in den Brühzylinder 31 eingefüllt. Nach Einfüllung des Kaffeepulvers wird die Brühkammer, wie in Fig. 14 gezeigt, mit den Zapfen 23, 24, 27 und 28 längs dem horizontalen Teil der Nuten 25, 26, 29 und 30 verschoben. In Fig. 15 ist der Verschwenkvorgang der Brühkammer 32 dargestellt. Der Abstreifer 55 bewegt sich über den oberen Rand des Brühzylinders nach links gemäss Fig. 15. Nach der Verschwenkung erfolgt eine Verschiebung der Brühkammer parallel zur Gewindestange schräg nach oben, wie in Fig. 16 dargestellt, bis die Brühkammer die Brühposition gemäss Fig. 17 erreicht. In der Brühposition strömt heisses Wasser über den Wasseranschluss 91 durch die Schlitze 105 und die Siebplatte 33 in den Brühzylinder 31 mit Kaffeepulver. Bevor Brühwasser durch den Wasseranschluss 91 in den Brühzylinder 31 strömt, befindet sich die Brühkammer 32 in der obersten Lage relativ zum Brühkolben 76. Das Kaffeepulver ist zusammengepresst, wobei auch die Feder 38 unterhalb der Siebplatte 33 ganz zusammengedrückt ist. Wenn Wasser das Kaffeepulver nässt, so kann in dieser Aufschwemmphase sich die Feder etwa um den halben Federweg, d.h. um ca. 1,5 mm ausdehnen (wie in Fig. 17) gezeigt. Am Schluss des Brühvorganges, wenn die Brühkammer 32 durch den Antrieb wieder nach unten bewegt wird, dehnt sich die Feder 38 auf die ganze Länge von 3 mm aus, wobei der ausgelaugte Kaffeekuchen 106 an die Siebplatte 80 des festen Brühkolbens 76 gepresst wird. Der gebrühte Kaffee strömt danach durch die Siebplatte 80 im Brühkolben 76 und durch den Schlauch 85 zum Kaffeeausguss. Nach dem Brühvorgang wird die Brühkammer, angetrieben durch die Gewindestange 14 über die Bügel 21 und 22, wieder entlang dem schrägverlaufenden Teil der Nuten 25, 26, 29 und 30 zwangsläufig gesteuert, schräg nach links unten gemäss Fig. 18 verschoben. Dabei stehen die Ansätze 70 und 71 des Bügels 51 an den Absätzen 73 an, wodurch die Rolle 49 im sich nach unten bewegenden Schlitz 48 nach oben verschoben wird und sich dabei die Kolbenstange 35 mit der Siebplatte 33 im Brühzylinder 31 nach oben verschiebt. Die Kolbenstange 35 führt wegen des Uebersetzungsverhältnisses 2 : 1 des Seilzuges den doppelten Weg als die Rolle 49 aus. Der Stift 52 mit der Rolle 46 befindet sich im horizontalen Schlitz 45 noch in der rechten Position gemäss Fig. 18. Fig. 19 zeigt die Brühkammer in der Position, in welcher die Verkippung beginnt. Die Kolbenstange 35 mit der Siebplatte 33 befindet sich zuoberst im Brühzylinder 31, und der Kaffeekuchen 106 steht über den Rand des Brühzylinders 31 ab. Der Stift 52 mit der Rolle 46 hat sich in der Zwischenzeit bei der Aufwärtsbewegung der Kolbenstange 35 im Schlitz 45 nach links gemäss Fig. 19 bewegt. Bei der weiteren zwangsläufigen Bewegung der Brühkammer 32 bewegt sich der Abstreifer 55 relativ nach rechts gemäss Fig. 20 und streift den Kaffeekuchen 106 von der Siebplatte 33 ab. Die Brühkammer 32 wird nun in die in Fig. 1 gezeigte Stellung verkippt, wobei der Stift 52 am Ansatz 54 ansteht, wodurch er sich mit der Rolle 46 nach rechts im Schlitz 45 bewegt und die Kolbenstange 35 mit der Siebplatte 33 im Brühzylinder 31 wieder nach unten zieht, um die Brühkammer in Bereitschaftsstellung zur Kaffeepulvereinfüllung zu bringen.

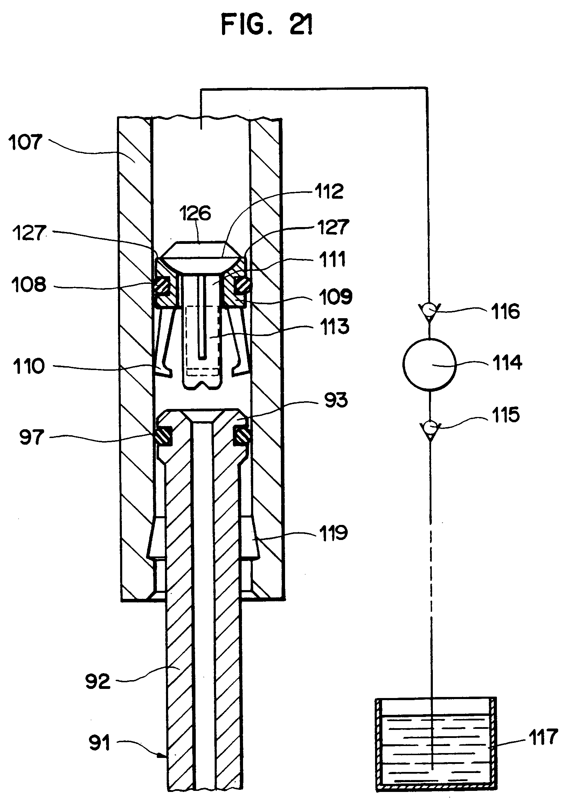

In Fig. 21 ist der Brühwasseranschluss 91 im Detail dargestellt. Beim Einfüllvorgang wird das an der Brühvorrichtung befindliche vertikale Rohr 92 in ein in der Kaffeemaschine fest angeordnetes Einfüllrohr 107 geschoben. Im Einfüllrohr 107 befindet sich ein auf und ab bewegbares, mit einem O-Ring 108 abgedichtetes Ventilstück 109. Das Ventilstück 109 wird durch federnde Schenkel 110 an die Innenwand des Rohres 107 gedrückt. In eine zentrische Bohrung des Ventilstücks 109 ist ein Ventilstöpsel 111 mit einem Kopf 112 und einem daran anschliessenden zylindrischen Teil 113 eingesetzt. Die obere Fläche 126 des Ventilkopfes 112 ist grösser als die obere, neben dem Ventilkopf 112 hinausragende kreisringförmige Fläche 127 des Ventilstückes 109. Ueber eine Pumpe 114 wird über zwei mit ihr verbundene Ventile 115 und 116 von einem Wasserbehälter 117 über eine nicht dargestellte Aufheizvorrichtung Brühwasser zum Einfüllrohr 107 zugeführt. Unten im Rohr befindet sich eine Kegelstumpfförmige Ausnehmung 118, welche einen Anschlag für die Schenkel 110 des Ventilstückes 109 bildet. Da die Fläche 126 grösser als die Fläche 127 ist, so wird der Ventilstöpsel 111 auf das Ventilstück 109 gedrückt, wenn Brühwasser in das Rohr 107 strömt. Durch Hinaufschieben des Rohres 92 im Rohr 107 wird der Ventilkopf 112 über das Ventilstück 109 hinaufgedrückt und es kann Brühwasser zum Rohr 92 strömen. Da das Brühkammervolumen variabel ist, wird das Rohr 92, je nach eingefüllter Kaffeemenge, verschieden hoch in das Wasserzuführrohr hinaufgestossen.

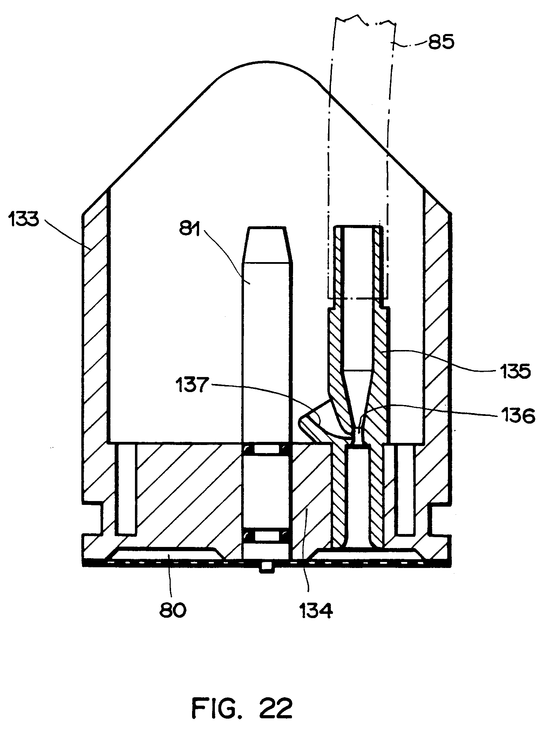

In Fig. 22 ist eine weitere Ausführungsform eines Brühkolbens 133 dargestellt. Das in den Boden 134 des Brühkolbens eingesetzte Rohr 135 ist nach dem Prinzip eines Venturi-Rohrs aufgebaut. Das Rohr weist eine verengte Stelle 136 und benachbart dieser Stelle einen Lufteintrittskanal 137 zur Belüftung des Abflussrohres 135 auf. Mit dieser Anordnung wird ebenfalls erzielt, dass die gesamte gebrühte Kaffeemenge aus dem Schlauch 85 abfliesst, kein Kaffee verloren geht und dabei auch ein trockenerer Kaffeekuchen erhalten wird, was die Schimmelbildung reduziert. Im weiteren wird durch diese Anordnung eine vermehrte Schaumbildung auf der Kaffeeoberfläche in der Kaffeetasse erzielt.

Die Brühvorrichtung eignet sich zum lösbaren Einbau in eine Kaffeemaschine und kann leicht herausgenommen und gereinigt werden.

## Patentansprüche

1. Brühvorrichtung (1) insbesondere für eine Kaffeemaschine mit Seitenplatten (2, 3) zur Befestigung von Einzelteilen der Brühvorrichtung, wobei in den Seitenplatten (2, 3) Nuten (25, 26, 29, 30, 62, 66, 72, 75) zur Führung einer Brühkammer (32) vorgesehen sind, und die Brühkammer mit in den Nuten (25, 26, 29, 30) geführten Zapfen (23, 24, 27, 28) versehen ist, mit einem Brühkolben (76) und einem Ausguss (84, 85, 90) für das gebrühte Getränk, wobei Antriebsmittel (4, 9, 10, 14, 19, 21, 22) zum Verschieben der Brühkammer (32) vorgesehen sind, und die Antriebsmittel einen lösbar in der Brühvorrichtung (1) gehaltenen Motor (4), und mit der Brühkammer (32) verbundenes Zug- und Druckmittel (21) umfassen, wobei in der Brühkammer ein in der Höhe verstellbares, eine Kolbenstange (35) umfassendes Ausstossmittel (33, 34, 35) vorgesehen ist, derart, dass das Ausstossmittel im Verhältnis zu den Antriebsorganen einen übersetzten Weg zurücklegt, dadurch gekennzeichnet daß die Antriebsmittel auch eine vom Motor getriebene Gewindestange (14) umfassen, daß das Zug- und Druckmittel von der Gewindestange betätigt wird, daß integriert in der Brühkammer (32) Antriebsorganen (40, (41, 46, 47, 49, 50, 51) angeordnet sind, wobei die Antriebsorgane ein mit der Kolbenstange (35) verbundenes, über Rollen (46, 47, 49, 50) geführtes Zugorgan (41) umfassen, wobei eine erste Rolle (46) mit einem Stift (52) in einem horizontalen Schlitz (45) und eine zweite Rolle (49) mit einem Stift (74) in einem vertikalen Schlitz (48) geführt ist.

2. Vorrichtung nach Patentanspruch 1, dadurch gekennzeichnet, dass die erste Rolle (46) mit dem Zugorgan (41) und in den Seitenplatten (2, 3) angeordneten Absätzen (54) zusammenwirkt.

3. Vorrichtung nach Patentanspruch 1 oder 2, dadurch gekennzeichnet, dass ein mit Betätigungsansätzen (70, 71) versehener, mit der zweiten Rolle (49) und dem Zugorgan (41) zusammenwirkender Bügel im vertikalen Schlitz (48) geführt ist.

4. Vorrichtung nach einem der vorangehenden Patentansprüche, dadurch gekennzeichnet, dass die Brühkammer (32) beidseitig gegenüberliegend den Seitenplatten (2, 3) je zwei Führungszapfen (23, 27; 24, 28) aufweist.

5. Vorrichtung nach einem der vorangehenden Patentansprüche, dadurch gekennzeichnet, dass die je in einer Seitenplatte (2, 3) liegenden Nuten (25, 29; 26, 30) und die in diesen Nuten geführten Zapfen (23, 27; 24, 28) eine voneinander verschiedene Tiefe respektive Höhe aufweisen.

6. Vorrichtung nach einem der vorangehenden Patentansprüche, dadurch gekennzeichnet, dass die Nuten (25, 29; 26, 30) zur Führung der Zapfen winkelförmig ausgebildet sind und sich überschneiden.

7. Vorrichtung nach Patentanspruch 1, dadurch gekennzeichnet, dass das Ausstossmittel eine im Brühzylinder (31) angeordnete mit der Kolbenstange (35) verbundene Halteplatte (34) mit einer darauf angeordneten Siebplatte (33) umfasst.

8. Vorrichtung nach einem der vorangehenden Patentansprüche, dadurch gekennzeichnet, dass die Brühkammer (32) mit einem relativ zur Brühkammer (32) beweglichen Abstreifer (55) versehen ist, der mit einer in den Seitenplatten (2, 3) angeordneten Führung (62) zusammenwirkt.

## Claims

1. Brewing device (1) especially for a coffee machine with side plates (2, 3) for fastening individual components of the brewing device, grooves (25, 26, 29, 30, 62, 66, 72, 75) being foreseen in the side plates (2, 3) for guiding a brewing chamber (32), and the brewing chamber being provided with pegs (23, 24, 27, 28) conducted in the grooves (25, 26, 29, 30), with a brewing piston (76) and an outlet (84, 85, 90) for the brewed beverage, driving means (4, 9, 10, 14, 19, 21, 22) being foreseen for displacement of the brewing chamber (32) and the driving means comprising a motor (4) detachably maintained in the brewing device (1), pulling and pressing means (21) connected to the brewing chamber, an ejection means (33, 34, 35), adjustable in height, comprising a piston rod (35) being foreseen in such a way that the ejection means follows a stepped up path with respect to the driving elements characterized in that the driving means also comprise a threaded rod (14) driven by the motor, that the pulling and pressing means are actuated by the threaded rod, that driving elements (40, 41, 46, 47, 49, 50, 51) are disposed integrated in the brewing chamber (32), the driving elements comprising a pulling element (41) connected to the piston rod (35) guided over rollers (46, 47, 49, 50), the first roller (46) being led with a pin (52) in a horizontal slot (45) and a second roller (49) with a pin (74) in a vertical slot (48).

2. Device according to claim 1, characterized in that the first roller (46) cooperates with the pulling element (41) and the shoulders (54) in the side plates (2, 3).

3. Device according to claim 1 or 2, characterized in that a bow, provided with actuation projections (70, 71) and cooperating with the second roller (49) and the pulling element (41), is guided in the vertical slot (48).

4. Device according to one of the preceding claims, characterized in that the brewing chamber (32) has on both sides two guide pegs (23, 27; 24, 28) each opposite the side plates (2, 3).

5. Device according to one of the preceding claims, characterized in that the groove (25, 29; 26, 30), disposed in each case in a side plate (2, 3), and the pegs (23, 27; 24, 28) guided in these grooves have differing depths or heights, respectively, with respect to one another.

6. Device according to one of the preceding claims characterized in that the grooves (25, 29; 26, 30) for guiding the pegs are designed angular and overlap.

7. Device according to claim 1, characterized in that the ejection means comprises a supporting plate (34) disposed in the brewing cylinder (31) and connected to the piston rod (35) with a sieve plate (33) disposed thereon.

8. Device according to one of the preceding claims, characterized in that the brewing chamber (32) is provided with a stripper (55) movable with respect to the brewing chamber (32), which stripper cooperates with a guide (62) disposed in one of the side plates (2, 3).

## Revendications

1. Dispositif d'infusion (1), en particulier pour une machine à café, comprenant des faces latérales (2, 3) servant de fixation pour des pièces du dispositif d'infusion, dans lequel des rainures (25, 26, 29, 30, 62, 66, 72, 75) sont prévues pour le guidage d'une chambre d'infusion (32), la chambre d'infusion étant munie de tenons engagés dans les rainures (25, 26, 29, 30), un piston d'infusion (76) ainsi qu'une évacuation (84, 85, 90) pour la boisson infusée étant prévus, dans lequel des moyens d'actuation (4, 9, 10, 14, 19, 21, 22) pour le déplacement de la chambre d'infusion (32) sont prévus, les moyens d'actuation comprenant un moteur (4) maintenu de façon démontable dans le dispositif d'infusion et des moyens de traction et de pression (21) reliés à la chambre d'infusion, des moyens d'expulsion (33, 34, 35) déplaçables en hauteur et comprenant une tige de piston (35) étant prévus dans la chambre d'infusion, de telle sorte que les moyens d'expulsion effectuent un trajet démultiplié par rapport à des organes d'entraînement (40, 41, 46, 47, 49, 50, 51), caractérisé en ce que les moyens d'actuation comprennent en outre une tige filetée (14) entraînée par le moteur, les moyens de traction et de pression (21) étant actionnés par la tige filetée, les organes d'entraînement étant intégrés dans la chambre d'infusion, les organes d'entraînement comprenant un organe de traction (41) relié à la tige de piston (35) et conduit sur des rouleaux (46, 47, 49, 50), un premier rouleau (46) étant conduit par une broche (52) dans une rainure horizontale (45) et un deuxième rouleau (49) étant conduit par une broche (74) dans une rainure verticale (48).

2. Dispositif selon la revendication 1, caractérisé en ce que le premier rouleau (46) collabore avec l'organe de traction (41) et avec des décrochements (54) placés dans les faces latérales (2, 3).

3. Dispositif selon les revendications 1 ou 2, caractérisé en ce qu'un étrier équipé de salles d'actionnement (70, 71) est conduit dans la rainure verticale en collaboration avec le deuxième rouleau (49) et l'organe de traction (41).

4. Dispositif selon l'une des revendications précédentes, caractérisé en ce que la chambre d'infusion (32) présente sur chaque côté en regard des faces latérales (2,3) deux tenons de guidage (23, 27; 24, 28).

5. Dispositif selon l'une des revendications précédentes, caractérisé en ce que les rainures (25, 29; 26, 30) prévues dans chaque face latérale (2, 3) et les tenons (23, 27; 24, 28) guidés dans ces rainures ont une profondeur, respectivement une hauteur, qui est différente.

6. Dispositif selon l'une des revendications précédentes, caractérisé en ce que les rainures (25, 29; 26, 30) de guidage des tenons forment un angle et se chevauchent.

7. Dispositif selon la revendication 1, caractérisé en ce que les moyens d'expulsion comprennent une plaque de maintien (34) placée dans le cylindre d'infusion et reliée avec la tige de piston (35), ainsi qu'une plaque perforée (33) placée dessus.

8. Dispositif selon l'une des revendications précédentes, caractérisé en ce que la chambre d'infusion (32) est munie d'une tringle de débourrage (55) mobile par rapport à la chambre d'infusion (32) et collaborant avec les rainures aménagées dans les faces latérales.
